# EUROPÄISCHE PATENTSCHRIFT

(11) **EP 0 635 657 B1**
(45) Veröffentlichungstag und Bekanntmachung des Hinweises auf die Patenterteilung: **27.11.1996**
(21) Anmeldenummer: 94105666.5
(22) Anmeldetag: 13.04.1994
(51) Int. Cl.: F16F 13/26

(54) **Aktives Stellelement**
Active positioning device
Dispositif actif de positionnement

(30) Priorität: 09.07.1993 DE 4322958
(43) Veröffentlichungstag der Anmeldung: 25.01.1995
(73) Patentinhaber: Firma Carl Freudenberg, D-69469 Weinheim (DE)
(72) Erfinder: Kurr, Klaus, Dr., D-69469 Weinheim (DE); Schweikert, Willi, D-69123 Heidelberg (DE); Barth, Armin, D-69517 Gorxheimertal (DE)

(56) Entgegenhaltungen:
- EP-A- 0 163 844
- EP-A- 0 480 459
- EP-A- 0 547 287
- DE-A- 4 036 538
- PATENT ABSTRACTS OF JAPAN vol. 16, no. 519 (M-1330) 26. Oktober 1992 & JP-A-04 191 541 (NISSAN MOTOR CO LTD) 9. Juli 1992

## Beschreibung

Die Erfindung betrifft ein Gummilager mit einer sich am Traglager abstützenden Tragfeder und einem aktiven Stellelement mit einem als Federelement ausgebildeten Arbeitsglied, wobei das Federelement und das Stellglied in einem von einem Gehäuse umschlossenen Raum angeordnet und in Richtung der in das Gummilager eingeleiteten Schwingungen hinund herbewegbar sind, und wobei das Stellglied gegenüber dem Gehäuse abgedichtet ist, wobei das Federelement durch eine Druckfeder gebildet ist, die bedarfsweise als zusätzlich tragende Feder zuschaltbar ist und einerseits auf dem Stellglied und andererseits, durch das Stellglied bedarfsweise zuschaltbar, am Traglager des Gummilagers unter elastischer Vorspannung abgestützt ist.

Ein solches Gummilager ist aus der DE-A-40 36 538 bekannt. Die Federsteifigkeit des vorbekannten Gummilagers ist durch Zuschaltung einer zweiten Tragfeder veränderbar. Eine der beiden Tragfedem ist ständig wirksam; die andere Tragfeder ist demgegenüber in Abhängigkeit vom Fahrbetriebszustand durch ein Betätigungselement zu- und abschaltbar. Das Abschalten wird dadurch erreicht, daß das Betätigungselement bei Zufuhr eines Druckmittels eine kraftschlüssige Verbindung zwischen dem ständig beaufschlagten Federelement und dem Befestigungsteil des Lagers herstellt.

Der Erfindung liegt die Aufgabe zugrunde, ein solches Gummilager derart weiter zu entwickeln, daß der Tragfeder des Gummilagers das Federelement, das einen Bestandteil des Stellelements bildet, bedarfsweise in Reihe zuschaltbar ist und daß das Stellelement einfacher und kostengünstiger herstellbar ist und als separates Bauteil an bestehenden Gummilagem verwendet werden kann.

Diese Aufgabe wird erfindungsgemäß mit den Merkmalen von Anspruch 1 gelöst. Auf vorteilhafte Ausgestaltungen nehmen die Unteransprüche Bezug.

Im Rahmen der vorliegenden Erfindung ist es vorgesehen, daß das Stellglied durch eine mit Druckgas beaufschlagbare Gasdruckfeder gebildet ist, die zumindest eine Kolben-Zylinder-Einheit umfaßt, die eine Rollmembran zur Abdichtung des Kolbens gegenüber dem Gehäuse aufweist, und daß die in Richtung der eingeleiteten Schwingungen zwischen dem Traglager und dem Kolben der Gasdruckfeder angeordnete Druckfeder zusammen mit dem Kolben gegenüber dem Traglager verlagerbar ist derart, daß in einem Schaltzustand das Traglager frei ist von dem mit dem Zylinder fest verbundenen Gehäuse, so daß die Druckfeder infolge der am Gummilager anliegenden Last und in Reihe geschaltet zur Tragfeder unter elastischer Vorspannung steht, und in einem anderen Schaltzustand sich das Traglager unter Entlastung der Druckfeder am Gehäuse abstützt. Dadurch, daß das Stellelement als separates Bauteil unabhängig von dem zur Anwendung gelangenden Gummilager hergestellt werden kann, können alle an sich bekannten Gummilager durch ein einfaches Anflanschen des Stellelements schaltbar gemacht werden. Durch das Federelement, das einem Bestandteil des Stellelements bildet und während der bestimmungsgemäßen Verwendung in Reihe zu der Tragfeder des Gummilagers schaltbar ist, kann eine einfache Anpassung der Gesamtfedercharakteristik des Gummilagers an die zu isolierenden / zu dämpfenden Schwingungen vorgenommen werden. Die Tragfeder des Gummilagers und das Federelement des Stellelements können eine übereinstimmende oder eine voneinander abweichende Federcharakteristik aufweisen. Wird das Federelement der Tragfeder durch Betätigung des Stellelements zugeschaltet, stellt sich eine relativ weichere Federcharakteristik zu Schwingungsisolierung niederfrequenter Schwingungen mit größeren Amplituden ein. Ist das Federelement demgegenüber von der Tragfeder des Gummilagers mechanisch abgekoppelt, weist das Gummilager seine ursprünglichen Gebrauchseigenschaften auf.

Das Gummilager kann als aktives oder passives Lager ausgebildet sein. Bevorzugt handelt es sich bei dem Gummilager jedoch um ein passives Lager, das als Hydrolager ausgebildet und durch das Stellelement in der Federrate umstellbar ist.

Die Verwendung einer mit Druckgas beaufschlagbaren Gasdruckfeder ist durch ihre weiche Schaltbarkeit und ihre kostengünstige Herstellbarkeit von Vorteil. Zur Isolierung akustisch störender Schwingungen ist eine vergleichsweise geringe Federrate des Lagers gewünscht. Um eine vergrößerte, elastische Nachgiebigkeit des Gummilagers zu erzielen, wird die Gasdruckfeder druckbeaufschlagt, wobei sich die Kolben-Zylinder-Einheit solange axial in Richtung des angrenzenden Gummilagers bewegt, bis das Federelement innerhalb des Stellelements der Tragfeder des Gummilagers in Reihe zugeschaltet ist. Im nichtgeschalteten Zustand ist das Federelement innerhalb des Stellelements dagegen nicht wirksam und die elastische Nachgiebigkeit des Gummilagers wird ausschließlich durch die Nachgiebigkeit der Tragfeder bestimmt.

Gelangt beispielsweise nur eine Kolben-Zylinder-Einheit zur Anwendung, ist zu beachten, daß durch die vergleichsweise geringe Größe der pneumatisch wirksamen Kolbenfläche zur Betätigung des Stellelements ein vergleichsweise großer Differenzdruck beiderseits des Kolbens erforderlich ist.

Ist der in die Gasdruckfeder einspeisbar Druck, beispielsweise derart begrenzt, daß sich nur ein vergleichsweise geringer Differenzdruck beiderseits der Kolben ergibt, der nicht ausreichen würde, das Stellelement zu betätigen, können mehrere Kolben-Zylinder-Einheiten in einer Parallelschaltung zusammengefaßt sein. Gelangt beispielsweise das Stellelement in Verbindung mit einem Motorlager zur Anwendung kann eine Unterdruckbeaufschlagung der Gasdruckfeder durch den Unterdruck im Ansaugrohr erfolgen. Zur elastischen Lagerung schwergewichtiger Bauteile, wie beispielsweise Verbrennungskraftmaschinen oder Werkzeugmaschinen, hat es sich dadurch als vorteilhaft bewährt, daß mehrere Kolben-Zylinder-Einheiten in einer Parallelschaltung zusammengefaßt sind. Hierbei ist von Vorteil, daß bei ansonsten gleichen Randbedingungen, wie der pneumatisch wirksamen Fläche des einzelnen Kolbens und dem an das zweite Federelement anlegbaren Gasdruck die übertragbare Kraft in gewünschtem Maße an die abzustützende Last angepaßt werden kann. Die von der Gasdruckfeder auf das Gummilager übertragbare Kraft ist durch die Anzahl der parallel geschalteten Kolben-Zylinder-Einheiten derart bemessen, daß bei Betätigung der Gasdruckfeder das Federelement dem Gummilager in Reihe zugeschaltet und dadurch die Gesamtfedercharakteristik des Lagers relativ weicher wird. Zur Isolierung von Schwingungen, die beispielsweise im Bereich der Leerlaufdrehzahl von Verbrennungskraftmaschinen auftreten, ist dies der Fall. Die Druckbeaufschlagung der Gasdruckfeder erfolgt demnach nur eine relativ kurze Zeit, während das Federelement außerhalb des, leerlaufnahen Drehzahlbereichs der Verbrennungskraftmaschine vom Gummilager mechanisch abgekoppelt ist und sich dadurch insgesamt eine relativ härtere Federcharakteristik zur Dämpfung höherfrequenter Schwingungen ergibt. Unter Vernachlässigung der Abmessungen der Kolbenstange, an der alle Kolben gemeinsam und relativ ortsfest befestigt sind, ist die übertragbare Kraft zur Betätigung des Federelements im wesentlichen proportional zur Anzahl der zur Anwendung gelangenden Kolben. Durch diese Ausgestaltung besteht die Möglichkeit, die übertragbare Kraft an die jeweiligen Gegebenheiten des Anwendungsfalles durch eine einfache bauliche Veränderung des Stellelements anpassen zu können. Durch einen modulhaften Aufbau lassen sich die Anwendungsmöglichkeiten in Kombination mit bereits vorhandenen Ferderungs- und / oder Dämpfungssystemen ermöglichen.

Zur Isolierung tieffrequenter Schwingungen kann einem passivem Gummilager ein in Reihe dazu angeordnetes Stellelement mit einem Federelement vorgeschaltet sein, so daß die zu isolierenden Frequenzen veränderbar sind und nicht auf die angrenzenden Bauteile übertragen werden.

Die Abdichtung der Kolben-Zylinder-Einheit durch eine Rollmembran ist von Vorteil, da sie bei Bewegungen des Kolbens in Richtung der eingeleiteten Schwingungen besonders leicht verformbar ist, wodurch das Ansprechverhalten der Gasdruckfeder deutlich verbessert wird. Außerdem bietet eine derartige Abdichtung gegenüber Abdichtungen, die reibungsbehaftet sind, den Vorteil, daß gebrauchsdauerverringernder Verschleiß und damit eine Beeinträchtigung der Gebrauchseigenschaften vermieden wird. Diese Ausgestaltung bedingt eine zuverlässige Abdichtung der druckbeaufschlagbaren Teilräume der Gasdruckfeder gegenüber den Bereichen der Kolben-Zylinder-Einheit, die mit Atmosphärendruck beaufschlagt sind.

Die Kolben können auf der einen Seite mit einem den atmosphärischen Druck unterschreitenden Druck und auf der anderen Seite mit atmosphärischem Druck beaufschlagbar sein. Ist die Gasdruckfeder mit Unterdruck beaufschlagbar, ist von Vorteil, daß das mit dem Stellelement versehene Gummilager problemlos als Motorlager zur Abstützung einer Verbrennungskraftmaschine in einem Kraftfahtreug zur Anwendung gelangen kann.

Nach einer anderen Ausgestaltung kann es vorgesehen sein, daß der Kolben auf der einen Seite mit dem atmosphärischen Druck und auf der anderen Seite mit einem den atmosphärischen Druck übersteigenden Druck beaufschlagbar ist. Eine derartige Betätigung ist dann von Vorteil, wenn ein ausreichend großer Überdruck zur Betätigung der Gasdruckfeder durch ein angrenzendes Aggregat, beispielsweise ein Verdichter, ohnehin zur Verfügung gestellt wird.
Nach einer vorteilhaften Ausgestaltung kann es vorgesehen sein, daß das Federelement durch eine Druckfeder aus metallischem Werkstoff gebildet ist. Hierbei ist von Vorteil, daß die Druckfeder während der gesamten Gebrauchsdauer des Stellelements übereinstimmende Gebrauchseigenschaften aufweist und Relaxationserscheinungen nicht zu befürchten sind.

Gemäß einer vorteilhaften Ausgestaltung kann die Druckfeder durch ein Tellerfederpaket gebildet sein. Die Verwendung von Tellerfedem ist insbesondere dann von Vorteil, wenn das Stellelement in Verbindung mit Motorlagem zur Anwendung gelangt. Durch die S-förmige Federkennlinie der Tellerfedem können diese bei Betätigung durch die Gasdruckfeder in einem Bereich betrieben werden, indem Veränderungen des Federwegs des Tellerfederpakets nahezu keine Änderung der Federkraft zur Folge haben. In diesem Bereich weisen die Tellerfedem eine besonders große Nachgiebigkeit auf, so daß in Verbindung mit der in Reihe geschalteten Tragfeder des Gummilagers eines besonders große Nachgiebigkeit zur Isolierung akustisch störender Schwingungen erzielt werden kann. Die Verwendung eines Tellerfederpakets ist außerdem im Hinblick auf geringe axiale Abmessungen von Vorteil.

Das Gehäuse kann auf der dem Gummilager zugewandten Seite mit einer sich konisch erweitemden Stützfläche versehen sein, wobei die Stützfläche eine Gummierung aufweist und mit einem kongruent geformten Traglager des Gummilagers im nicht-differenzdruckbeaufschlagten Zustand des Stellgliedes in Eingriff bringbar ist. Hierbei ist von Vorteil, daß das Gummilager im nicht-differenzdruckbeaufschlagten Zustand des Stellelements bei Einleitung von Querkräften auf den Stützflächen abgestützt ist. Durch die Gummierung der Stützflächen ist eine besonders geräuscharme Schaltbarkeit des Lagers bedingt.

Das erfindungsgemäße Gummilager mit einem aktiven Stellelement wird nachfolgend anhand der beigefügten Zeichnungen weiter erläutert.

In Figur 1 ist ein Ausführungsbeispiel gezeigt, bei dem das Gummilager als hydraulisch dämpfendes Lager ausgebildet und das Stellelement im nichtdifferenzdruckbeaufschlagten Zustand gezeigt ist.

In Figur 2 ist das Stellelement aus Figur 1 im unterdruck-beaufschlagten Zustand gezeigt, wobei das Federelement des Stellelements und die Tragfeder des Gummilagers in Reihe geschaltet sind.

In Fig. 3 ist das Stellelement in einem von den Fig. 1 und 2 abweichenden Betriebszustand gezeigt.

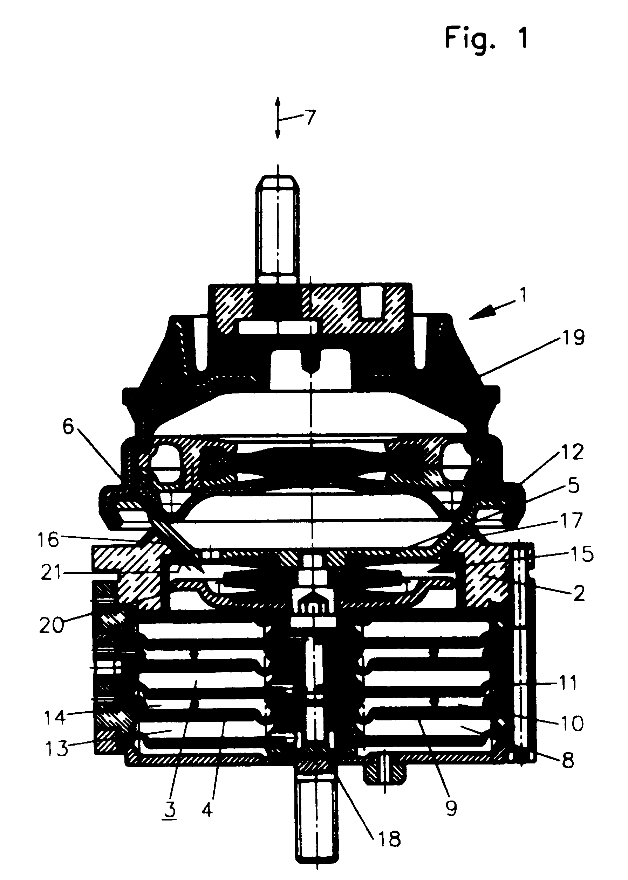

In Figur 1 ist ein Ausführungsbeispiel des erfindungsgemäßen Gummilagers 1 mit einem Stellelement gezeigt. Das Gummilager 1 ist in diesem Ausführungsbeispiel hydraulisch dämpfend ausgebildet. Das Stellelement ist mit einem unnachgiebigen, in Richtung des angrenzenden Gummilagers 1 offenen Gehäuse 2 versehen, wobei das Gehäuse 2 einen Raum 3 umschließt. Innerhalb des Raums 3 ist das als Gasdruckfeder 8 ausgebildete Stellglied 4 angeordnet, und ein als Federelement 5 ausgebildetes Arbeitsglied 6, wobei das Stellglied 4, das Arbeitsglied 6 und das Gehäuse 2 konzentrisch zueinander angeordnet sind. Die Gasdruckfeder 8 umfaßt in diesem Ausführungsbeispiel vier Kolben-Zylinder-Einheiten 9, 10, die jeweils durch eine Rollmembran 11 am Gehäuse 2 abgedichtet sind. Die Kolben sind auf der einen Seite 13 mit einem den atmosphärischen Druck unterschreitenden Druck und auf der anderen Seite 14 mit atmosphärischem Druck beaufschlagbar. Die Druckbeaufschlagung mit Atmosphärendruck erfolgt durch Ausnehmungen innerhalb des Gehäuses 2, die die Gehäusewandung radial in Richtung der jeweiligen Zylinder 10 durchdringen. Der Unterdruck wird aus dem Ansaugrohr einer Verbrennungskraftmaschine abgezweigt. Die Unterdruckbeaufschlagung auf der einen Seite 13 erfolgt durch die Kolbenstang 18, die hohlzylindrisch ausgebildet ist und in Richtung des druckbeaufschlagbaren Raums Ausnehmungen aufweist. Die Kolben 9, die jeweils in einem Zylinder 10 angeordnet sind, unterteilen die entsprechenden Zylinder in zwei axial benachbarte Teilräume. Die Kolben 9 sind an einer gemeinsamen Kolbenstange 18 befestigt. Die Kolben werden in Abhängigkeit vom anliegenden Differenzdruck in Richtung des Teilraums bewegt, der mit dem vergleichsweise geringeren Druck beaufschlagt ist. Die Parallelschaltung der Kolben-Zylinder-Einheiten 9, 10 bewirkt eine vergleichsweise große resultierende Kolbenfläche, wobei die zu erzielende Gesamtkraft durch Addition der Einzelkräfte der jeweiligen Kolben-Zylinder-Einheiten 9, 10 gebildet wird. Näherungsweise ist die Gesamtkraft viermal so groß, wie jede Einzelkraft. Eine derartige Parallelschaltung der Kolben-Zylinder-Einheiten 9, 10 ist insbesondere dann sinnvoll, wenn der Unterdruck begrenzt ist, mit dem die Gasdruckfeder 8 beaufschlagbar ist. Dies kann beispielsweise dann der Fall sein, wenn das Stellelement in Verbindung mit einem als Motorlager ausgebildeten Gummilager 1 zur Anwendung gelangt und die Druckbeaufschlagung durch Unterdruck aus dem Ansaugrohr der Verbrennungskraftmaschine erfolgt. Trotz des relativ geringen Differenzdrucks axial beiderseits der Kolben 9 besteht durch eine derartige Ausgestaltung die Möglichkeit, das Gummilager 1 von der Stützfläche 16 des Gehäuses 2 abzuheben und das Federelement 5, das als Tellerfederpaket 15 ausgebildet ist, in Reihe mit der Tragfeder 19 des Gummilagers 1 zu schalten. Durch die Reihenschaltung des Federelements 5 mit der Tragfeder 19 wird eine insgesamt vergleichsweise weiche Federcharakteristik erreicht, um akustisch störende Schwingungen isolieren zu können.

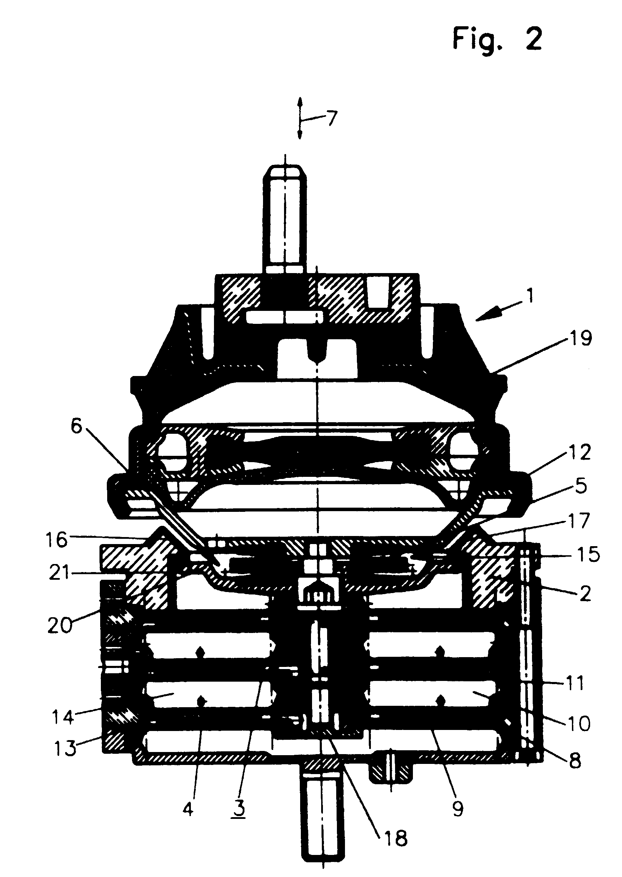

In Figur 2 ist das Stellelement im unterdruckbeaufschlagten Zustand gezeigt. Wird die Verbrennungskraftmaschine außerhalb des Drehzahlbereichs, in dem akustisch störende Schwingungen auftreten können, betrieben, wird die Druckbeaufschlagung der Gasdruckfeder 8 zurückgenommen und das Gummilager 1 setzt sich mit seinem Traglager 12 auf die Gummierung 17 der Stützfläche 16. Für die elastische Nachgiebigkeit des Gummilagers 1 ist dann im wesentlichen nur noch die Tragfeder 19 relevant. Die Betätigung des Stellelements und damit die Zuschaltung des Federelements 5 erfolgt in Abhängigkeit von Parametem, die die zu isolierenden / zu dämpfenden Schwingungen beschreiben. Die Unterdruckbeaufschlagung in diesen Ausführungsbeispielen kann beispielsweise von der elektronischen Motorsteuerung gesteuert werden. Ein Parameter, der die auftretenden Schwingungen beschreibt, wird beispielsweise durch die Motordrehzahl gebildet.

Das Stellelement im hier gezeigten Ausführungsbeispiel umfaßt außerdem einen Anschlag 20, der in axialer Richtung zwischen der Gasdruckfeder 8 und dem Tellerfederpaket 15 angeordnet ist. Der Anschlag ist gemeinsam mit den Kolben 9 der Gasdruckfeder in axialer Richtung beweglich wobei der Weg in axialer Richtung von der übertragbaren Kraft der Kolben-Zylinder-Einheiten 9, 10 abhängig ist. Wie in Figur 2 dargestellt, besteht die Möglichkeit, die Kolben-Zylinder-Einheiten 9, 10 derart mit Unterdruck zu beaufschlagen, daß der Anschlag 20 mit Gegenanschlagflächen 21 des Gehäuses 2 in Eingriff bringbar ist. Um Schaltgeräusche zu vermeiden, überdeckt die Gummierung 17 auch die Gegenanschlagflächen 21 in Richtung des Anschlags 20. In diesem Falle sind, wie zuvor beschrieben, die Tragfeder 19 des Gummilagers 1 und das Tellerfederpaket 15 des Stellelements funktionstechnisch in Reihe geschaltet.

Die Gasdruckfeder 8 ist nur vorgesehen, um Traglager 12 des Gummilagers 1 von der Stützfläche 16 des Stellelements abzuheben. Die Gasdruckfeder 8 kann in diesem Beispiel als nahezu unnachgiebig betrachtet werden, so daß lediglich die Tragfeder 1 und das Tellerfederpaket 15 in Reihe geschaltet sind.

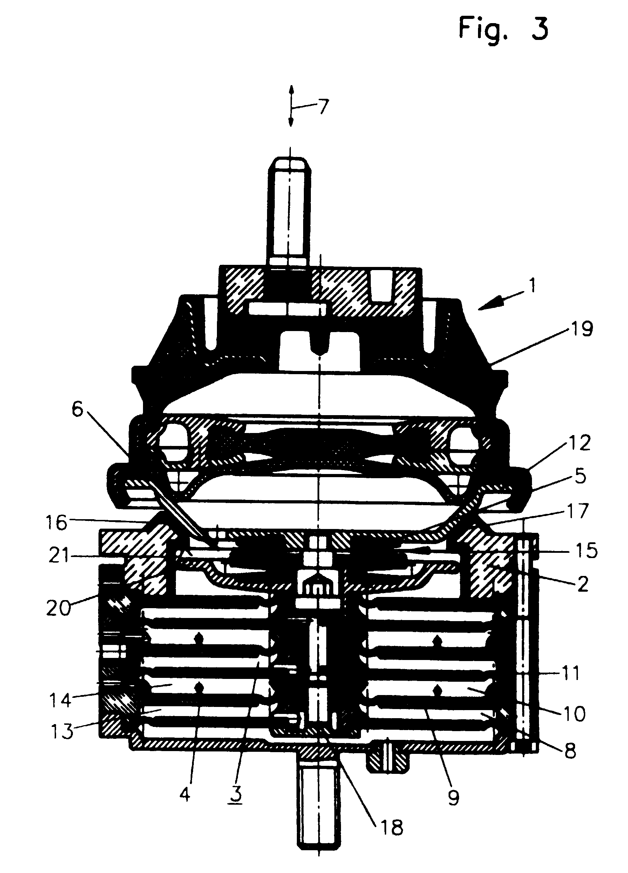

Abweichend von der in Figur 2 beschriebenen Betätigung ist in Figur 3 das zuvor beschriebene Stellelement gezeigt, wobei die Unterdruckbeaufschlagung der Kolben 9 derart vorgenommen wird, daß der Anschlag 20 zwischen den in den Figuren 1 und 2 gezeigten Positionen in der Schwebe gehalten wird. Dadurch wird der Tragfeder 19 des Gummilagers 1 zusätzlich zu dem in Reihe geschalteten Federpaket 15 die Gasdruckfeder 8 in Reihe geschaltet, um eine weiter verringerte Gesamtfedersteifigkeit zu erzielen.

### Bezugszeichenliste:

- 1: Gummilager
- 2: Gehäuse
- 3: Raum
- 4: Stellglied
- 5: Federelement
- 6: Arbeitsglied
- 7: Schwingungen
- 8: Gasdruckfeder
- 9: Kolben
- 10: Zylinder
- 11: Rollmembran
- 12: Traglager des Gummilagers 1
- 13: eine Seite des Kolbens 9
- 14: andere Seite des Kolbens 9
- 15: Tellerfederpaket
- 16: Stützfläche
- 17: Gummierung
- 18: Kolbenstange
- 19: Tragfeder des Gummilagers 1
- 20: Anschlag
- 21: Gegenanschlagfläche

## Patentansprüche

1. Gummilager (1) mit einer sich am Traglager (12) abstützenden Tragfeder (19) und einem aktiven Stellelement mit einem als Federelement (5) ausgebildeten Arbeitsglied (6), wobei das Federelement (5) und das Stellglied (4) in einem von einem Gehäuse (2) umschlossenen Raum (3) angeordnet und in Richtung der in das Gummilager (1) eingeleiteten Schwingungen (7) hin- und herbewegbar sind, und wobei das Stellglied (4) gegenüber dem Gehäuse (2) abgedichtet ist, wobei das Federelement (5) durch eine Druckfeder gebildet ist, die bedarfsweise als zusätzlich tragende Feder zuschaltbar ist und einerseits auf dem Stellglied (4) und andererseits, durch das Stellglied (4) bedarfsweise zuschaltbar, am Traglager (12) des Gummilagers (1) unter elastischer Vorspannung abgestützt ist, dadurch gekennzeichnet, daß das Stellglied (4) durch eine mit Druckgas beaufschlagbare Gasdruckfeder (8) gebildet ist, die zumindest eine Kolben-Zylinder-Einheit (9, 10) umfaßt, die eine Rollmembran (11) zur Abdichtung des Kolbens (9) gegenüber dem Gehäuse (2) aufweist, und daß die in Richtung der eingeleiteten Schwingungen (7) zwischen dem Traglager (12) und dem Kolben (9) der Gasdruckfeder (8) angeordnete Druckfeder zusammen mit dem Kolben (9) gegenüber dem Traglager (12) verlagerbar ist derart, daß in einem Schaltzustand das Traglager (12) frei ist von dem mit dem Zylinder (10) fest verbundenen Gehäuse (2), so daß die Druckfeder infolge der am Gummilager (1) anliegenden Last und in Reihe geschaltet zur Tragfeder (19) unter elastischer Vorspannung steht, und in einam anderen Schaltzustand sich das Traglager (12) unter Entlastung der Druckfeder am Gehäuse (2) abstützt ist.

2. Gummilager nach Anspruch 1, dadurch gekennzeichnet, daß mehrere Kolben-Zylinder-Einheiten (9, 10) in einer Parallelschaltung zusammengefaßt sind.

3. Gummilager nach einem der Ansprüche 1 bis 2, dadurch gekennzeichnet, daß die Kolben (9) auf der einen Seite (13) mit einem den atmosphärischen Druck unterschreitenden Druck und auf der anderen Seite (14) mit atmosphärischem Druck beaufschlagbar sind.

4. Gummilager nach Anspruch 2, dadurch gekennzeichnet, daß die Kolben (9) auf der einen Seite (13) mit atmosphärischem Druck und auf der anderen Seite (14) mit einem den atmosphärischen Druck übersteigenden Druck beaufschlagbar sind.

5. Gummilager nach Anspruch 1, dadurch gekennzeichnet, daß die Druckfeder aus einem metallischen Werkstoff gebildet ist.

6. Gummilager nach Anspruch 5, dadurch gekennzeichnet, daß die Druckfeder durch ein Tellerfederpaket (15) gebildet ist.

7. Gummilager nach Anspruch 1, dadurch gekennzeichnet, daß das Gehäuse (2)auf der dem Gummilager (1) zugewandten Seite mit einer sich konisch erweitemden Stützfläche versehen ist und daß die Stützfläche (16) eine Gummierung (17) aufweist und mit dem Traglager (12) des Gummilagers (1) im nicht-differenzdruckbeaufschlagten Zustand des Stellglieds (4) in Eingriff bringbar ist.

## Claims

1. A rubber mount (1) having a bearing spring (19) supported on the bearing mount (12) and an active positioning element with an operating member (6) configured as a spring element (5), the spring element (5) and the actuator (4) being arranged in a space (3) surrounded by a housing (2) and being movable back and forth in the direction of the vibrations (7) introduced into the rubber mount (1), and the actuator (4) being sealed off in relation to the housing (2), the spring element (5) being formed by a compression spring which, if required, can be included as an additionally bearing spring and is supported under elastic prestress on the one hand on the actuator (4) and on the other hand, being able to be included if required by the actuator (4), on the bearing mount (12) of the rubber mount (1), characterized in that the actuator (4) is formed by a gas compression spring (8) which can be pressurized with compressed gas and comprises at least one piston-cylinder unit (9, 10) which has a rolling diaphragm (11) to seal off the piston (9) in relation to the housing (2), and in that the compression spring arranged between the bearing mount (12) and the piston (9) of the gas compression spring (8) in the direction of the vibrations (7) introduced, can be displaced together with the piston (9) in relation to the bearing mount (12) in such a way that, in one switched state, the bearing mount (12) is free from the housing (2) firmly connected to the cylinder (10), such that the compression spring is subjected to elastic prestress as a result of the load imposed on the rubber mount (1) and as a result of being connected in series with the bearing spring (19), and in another switched state the bearing mount (12) is supported on the housing (2) with relief of the compression spring.

2. A rubber mount according to claim 1, characterized in that a plurality of piston-cylinder units (9, 10) are combined in a parallel connection.

3. A rubber mount according to either of claims 1 and 2, characterized in that the pistons (9) can be pressurized on one side (13) with a pressure which is less than atmospheric pressure and on the other side (14) with atmospheric pressure.

4. A rubber mount according to claim 2, characterized in that the pistons (9) can be pressurized on one side (13) with atmospheric pressure and on the other side (14) with a pressure which exceeds atmospheric pressure.

5. A rubber mount according to claim 1, characterized in that the compression spring is formed from a metallic material.

6. A rubber mount according to claim 5, characterized in that the compression spring is formed by a plate spring assembly (15).

7. A rubber mount according to claim 1, characterized in that the housing (2) is provided on the side facing the rubber mount (1) with a conically widening support face, and in that the support face (16) has a rubber coating (17) and can be brought into engagement with the bearing mount (12) of the rubber mount (1) in the state of the actuator (4) not pressurized by differential pressure.

## Revendications

1. Support élastique (1) comportant un ressort d'appui (19) s'appuyant sur le palier d'appui (12) et un dispositif actif de positionnement avec un organe de travail (6) réalisé sous forme d'élément élastique (5), l'élément élastique (5) et l'organe de positionnement (4) étant disposés dans un espace (3) enveloppé par un boîtier (2) et pouvant être placés dans un mouvement de va-et-vient dans le sens des oscillations (7) introduites dans le support élastique (1), et l'organe de positionnement (4) étant rendu étanche par rapport au boîtier (2), l'élément élastique (5) étant formé d'un ressort à pression susceptible, si nécessaire, d'être raccordé pour former un ressort d'appui auxiliaire et s'appuyant, d'une part, sur l'organe de positionnement (4) et, d'autre part, si nécessaire par raccordement grâce à l'organe de positionnement (4), sur le palier d'appui (12) du support élastique (1), sous précontrainte élastique, caractérisé en ce que l'organe de positionnement (4) est formé d'un ressort sous pression de gaz (8) susceptible d'être alimenté en gaz comprimé, qui comprend au moins un ensemble piston-cylindre (9, 10) comportant une membrane à rouler (11) pour rendre étanche le piston (9) par rapport au boîtier (2), et en ce que le ressort à pression disposé dans le sens des oscillations (7) introduites entre le palier d'appui (12) et le piston (9) du ressort sous pression de gaz (8) est susceptible d'être déplacé, ensemble avec le piston (9), par rapport au palier d'appui (12), de sorte que dans un état de commutation, le palier d'appui est libéré du boîtier (2) solidaire du cylindre (10), de façon à ce que le ressort à pression, en raison de la charge appliquée sur le support élastique (1) et monté en série avec le ressort d'appui (19), soit élastiquement précontraint, et de sorte que dans un autre état de commutation, le palier d'appui (12) s'appuie sur le boîtier (2) en déchargeant le ressort à pression.

2. Support élastique selon la revendication 1, caractérisé en ce que plusieurs ensembles piston-cylindre (9, 10) sont regroupés dans un montage en parallèle.

3. Support élastique selon l'une des revendications 1 et 2, caractérisé en ce que les pistons (9) peuvent être alimentés, sur un côté (13), avec une pression inférieure à la pression atmosphérique et, sur l'autre côté (14), avec une pression atmosphérique.

4. Support élastique selon la revendication 2, caractérisé en ce que les pistons (9) peuvent être alimentés, sur un côté (13), avec une pression atmosphérique et, sur l'autre côté (14), avec une pression supérieure à la pression atmosphérique.

5. Support élastique selon la revendication 1, caractérisé en ce que le ressort à pression est formé dans un matériau métallique.

6. Support élastique selon la revendication 5, caractérisé en ce que le ressort à pression est formé d'un bloc de ressorts Belleville (15).

7. Support élastique selon la revendication 1, caractérisé en ce que le boîtier (2) est pourvu, sur le côté orienté vers le support élastique (1), d'une surface d'appui s'élargissant coniquement et en ce que la surface d'appui (16) comporte un caoutchoutage (17) et est susceptible d'être mise en prise avec le palier d'appui (12) du support élastique (1) lorsque l'organe de positionnement (4) n'est pas alimenté en pression différentielle.
